**Europäisches Patentamt**

**European Patent Office**

**Office européen des brevets**

(19)

(11) Veröffentlichungsnummer : **0 110 018**
**B1**

(12)

# EUROPÄISCHE PATENTSCHRIFT

(45) Veröffentlichungstag der Patentschrift :
11.11.87

(21) Anmeldenummer : 83108244.1

(22) Anmeldetag : 22.08.83

(51) Int. Cl.⁴ : **G 01 M 3/26**, H 04 R 29/00,
A 61 F 11/00

(54) Messeinrichtung zur Prüfung der Dichtigkeit eines Ohrabdruckes und/oder einer Otoplastik.

(30) Priorität : 20.10.82 DE 3239227

(43) Veröffentlichungstag der Anmeldung :
13.06.84 Patentblatt 84/24

(45) Bekanntmachung des Hinweises auf die Patenterteilung : 11.11.87 Patentblatt 87/46

(84) Benannte Vertragsstaaten :
AT CH DE FR GB IT LI NL SE

(56) Entgegenhaltungen :
DE-A- 2 941 817
Die Akte enthält technische Angaben, die nach dem
Eingang der Anmeldung eingereicht wurden und die
nicht in dieser Patentschrift enthalten sind.

(73) Patentinhaber : Bruckhoff, Henning
Lister Meile 23
D-3000 Hannover 1 (DE)

(72) Erfinder : Bruckhoff, Henning
Lister Meile 23
D-3000 Hannover 1 (DE)

(74) Vertreter : Eikenberg & Brümmerstedt Patentanwälte
Schackstrasse 1
D-3000 Hannover 1 (DE)

**Beschreibung**

Zum Ausgleich des Hörverlustes bedienen sich schwerhörige Personen schon seit langer Zeit der unterschiedlichsten Hörgeräte. Unabhängig von dem speziellen Aufbau der Hörgeräte allen gemeinsam, daß der Schall immer in das Ohr geleitet werden muß, wenn über eine Luftleitung gehört wird, was der Regelfall ist. Zu diesem Zweck wird in den Gehörgang eine sogenannte Otoplastik eingesetzt, die der Kontur des Gehörgangs vollständig angepaßt ist und abdichtend anliegen soll. Der Schall wird durch eine in der Otoplastik befindliche Luftleitung vom Hörgerät zum Trommelfell geleitet und darf keine Möglichkeit haben, durch undichte Stellen nach außen zu gelangen. Bei einer unvollständigen Abdichtung kann sich nämlich sehr leicht eine akustische Rückkopplung einstellen, die dadurch zustande kommt, daß der durch die undichte Stelle austretende Schall wieder zum Mikrofon des Hörgerätes gelangt, dort im Verstärker seine Amplitude vergrößert, durch die Luftleitung zum Trommelfell geführt und wieder nach außen zum Mikrofon austritt usw., wodurch dann Schwingungen entstehen, die sich in einem lauten unangenehmen Piepton äußern. Außerdem führen die undichten Stellen bei einem nicht exakten Sitz der Otoplastik im Gehörgang zu Verzerrungen des Frequenzbandes.

Die obigen Überlegungen zeigen, daß der Herstellung der Otoplastik eine entscheidende Bedeutung zukommt. Üblicherweise wird das sogenannte « Positiv-Negativ-Positiv-Verfahren » angewandt, bei welchem zunächst unter Zuhilfenahme einer Abdruckmasse ein Ohrabdruck hergestellt wird, indem die Abdruckmasse in den Gehörgang eingefügt wird. Nach kurzer Zeit verfestigt sich die Abdruckmasse, und man kann nun von dem Abdruck (positiv) ein Negativ herstellen. Zu diesem Zweck wird der Abdruck in Gips oder Kunststoffmaterial eingebettet und nach dem Abbinden des Einbettungsmaterials wieder entnommen. Es verbleibt eine dem Ohrabdruck entsprechende Mulde, die nun auf verschiedene Weise mit Kunststoff gefüllt werden kann. Auf diese, Weise erhält man eine originalgetreue Kopie des Ohrabdrucks, also die Otoplastik, die bei einem genauen Herstellungsverfahren nun exakt in den Gehörgang paßt, ohne daß undichte Stellen verbleiben. Als letztes wird noch die Bohrung für den Schallschlauch in der Otoplastik vorgesehen, so daß der Schall von dem Hörgerät über diesen Schlauch zum Trommelfell geleitet werden kann.

In der Praxis verläuft die Herstellung der Otoplastik leider nicht immer problemlos, und es hat sich vor allem gezeigt, daß die fertige Otoplastik häufig nicht exakt im Gehörgang sitzt und deshalb nicht die geforderte vollständige Abdichtung gewährleistet. Es kommen hier zwei Fehlerquellen infrage, denn zum einen kann schon der Ohrabdruck ungenau sein, z. B. durch Einschluß von Luftblasen oder durch Schrumpfung des Abdruckmaterials, und zum anderen können Fehler bei der Herstellung der Otoplastik selbst auftreten, auch wenn der als Vorlage dienende Ohrabdruck korrekt ist. Früher bestand keine Möglichkeit, die wahre Fehlerquelle bei einer nicht abdichtenden Otoplastik festzustellen. Während eine Überprüfung des fertigen Ohrabdruckes überhaupt nicht möglich war, erstreckte sich die Kontrolle der Otoplastik auf eine subjektive überprüfung durch Befragung des Schwerhörigen und Untersuchung auf Paßgenauigkeit und Rückkopplung. Bei einer fehlerhaften Otoplastik blieb somit nur der Weg übrig, das ganze Herstellungsverfahren zu wiederholen und aufgrund eines neuen Ohrabdruckes eine neue Otoplastik herzustellen, in der Hoffnung, daß diese nun exakt in den Gehörgang paßt.

In den eigenen DE-OS 2 941 817.5 ist ein Prüfverfahren beschrieben, mit dem es erstmals möglich ist, die Güte und die Qualität eines Ohrabdruckes oder einer Otoplastik festzustellen. Bei diesem Verfahren wird über eine luftdurchlässige Verbindung von dem durch das Trommelfell und den Ohrabdruck bzw. die Otoplastik begrenzten inneren Raum nach außen hin ein von dem außen vorhandenen Luftdruck abweichender Luftdruck in dem inneren Raum erzeugt, und dann wird gemessen, ob der Druck erhalten bleibt oder abnimmt, wobei die Geschwindigkeit der Änderung des Druckes an einem Meßgerät feststellbar ist und eine direkte Aussage über die Qualität und Verwendbarkeit des Ohrabdruckes gibt.

Die praktische Ausführung eines Meßgerätes stößt jedoch auf Schwierigkeiten, weil einerseits der Ohrinnenraum nur mit einem sehr geringen Druck von höchstens etwa 20 mbar beaufschlagt werden darf, und das Volumen im Ohr-Innenraum nur etwa 2 cm$^3$ beträgt und damit sehr gering ist. Bei direkter Beaufschlagung des Ohr-Innenraums mit einem sehr kleinen Überdruck in der obengenannten Größenordnung führen Abweichungen vom mittleren Volumen des Gehörgangs, das naturgemäß nicht bei allen Menschen gleich ist, zu Verfälschungen des Meßwertes. Besonders starke Meßungenauigkeiten ergeben sich bei operativ erweiterten Gehörgängen oder Radikalhöhlen. Hinzu kommt, daß der kleine Überdruck in dem kleinen Volumen sich auch schon bei kleinen Undichtigkeiten sehr rasch abbaut und dadurch eine zuverlässige Messung erschwert.

Die Erfindung geht aus von einer Meßeinrichtung zur Prüfung der Dichtigkeit eines als Vorlage für die Herstellung einer Otoplastik dienenden Ohrabdruckes und/oder einer im Gehörgang eines Ohres angeordneten Otoplastik, mit der über eine luftdurchlässige Verbindung in dem durch das Trommelfell und dem Ohrabdruck bzw. der Otoplastik begrenzten inneren Raum ein von dem außen vorhandenen Luftdruck abweichender Luftdruck herstellbar und Änderungen des erzeugten abweichenden Luftdruckes meßbar sind.

Der Erfindung liegt die Aufgabe zugrunde, eine Meßeinrichtung der vorgenannten Art zu schaffen, die sich durch eine hohe Meßgenauigkeit und Unempfindlichkeit bei Unterschieden im Volumen des Innenraumes auszeichnet, und die eine reproduzierbare Anzeige über die Qualität und Verwendbarkeit des Ohrabdruckes bzw. der Otoplastik liefert.

Die gestellte Aufgabe wird gemäß der Erfindung dadurch gelöst, daß die luftdurchlässige Verbindung an die zur Erzeugung des abweichenden Luftdruckes dienende Pumpe über eine Druck-Kammer angeschlossen ist, deren Volumen zwischen etwa 20 bis 100 Mal so groß, vorzugsweise etwa 50 Mal so groß ist wie das Volumen des inneren Raumes im Ohr, daß als Pumpe eine Kolbenpumpe dient, deren Hubraum etwa dem Volumen des inneren Raumes im Ohr entspricht, daß das Volumen der Druck-Kammer in Anpassung an den atmosphärischen Druck am Meßort einstellbar ist, und daß eine den Zeitablauf des Pump- und Meßvorganges vorgebende Steuerschaltung vorgesehen ist.

Mit Hilfe der Druck-Kammer wird das kleine Luftvolumen, das sich zwischen dem Ohrabdruck bzw. der Otoplastik und dem Trommelfell befindet, um ein Vielfaches vergrößert, so daß damit Meßungenauigkeiten selbst bei operativ erweiterten Gehörgängen oder Radikalhöhlen vermieden werden.

Durch den großen Unterschied zwischen dem Volumen der Druck-Kammer und dem Volumen des inneren Raumes im Ohr wirken sich Unterschiede im Volumen des Ohrinnenraumes entsprechend geringer aus. Außerdem kann durch das vergrößerte Luftvolumen der Überdruck bei einer Undichtigkeit langsam abgebaut werden, so daß eine zuverlässige Anzeige gewährleistet ist. Die Steuerschaltung löst dabei den Pumpvorgang aus, der nur einen Kolbenhub erfordert, und steuert den zeitlichen Verlauf des Meßvorganges, so daß reproduzierbare Meßergebnisse erzielt werden können.

Der erzeugte Überdruck ist so klein, daß der atmosphärische Luftdruck in größeren Höhen das Meßgerät beeinflußt. Eine solche Verfälschung des Meßergebnisses kann durch die Einstellung des Volumens der Druck-Kammer verhindert werden. Dies geschieht vorzugsweise mit einem in die Druck-Kammer einschiebbaren Kolben, der dessen Volumen entsprechend dem Standort der Meßeinrichtung über Meereshöhe verkleinert.

Vorzugsweise steuert die Steuerschaltung mit Auslösung des Pumpvorganges ein schreibendes Meßgerät an, das den Augenblickswert des Druckes über der Zeit aufzeichnet, wobei nach Ablauf der Zeit, in der der Kolben der Pumpe einen Hub ausgeführt hat, der Maximalwert als Maß für den Durchmesser einer Undichtigkeit ablesbar ist und zu einem vorgegebenen späteren Zeitpunkt ein Wert als Maß für den dann noch verbliebenen Druck in einer Skala von 100 bis 0 ablesbar ist, wobei die Zahl 100 dem Zustand einer vollkommenen Dichtigkeit entspricht.

Die Erfindung wird nachfolgend anhand der Zeichnung näher erläutert. In der Zeichnung bedeuten :

Fig. 1 eine schematische Anordnung zur Erzeugung eines Überdruckes im Innenraum des Ohrs ;

Fig. 2 ein Blockschaltbild der Meßeinrichtung und

Fig. 3 ein Meßblatt mit einer vom Meßgerät darin eingezeichneten Kurve.

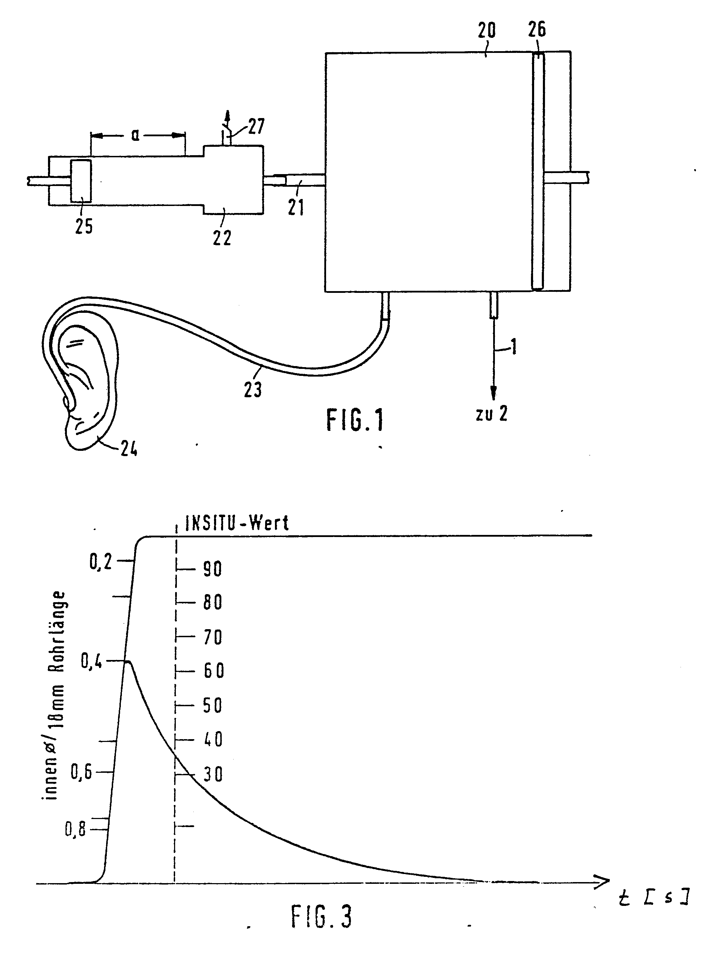

In Fig. 1 ist eine Druck-Kammer 20 einerseits über einen Stutzen 21 an eine elektrische Kolbenpumpe 22 und andererseits über einen Schlauch 23 an eine Otoplastik oder einen Ohrabdruck angeschlossen, wobei der Ohrabdruck bzw. die Otoplastik in das Ohr 24 eines Patienten eingesetzt ist, so daß durch den durch den Ohrabdruck bzw. die Otoplastik hindurchlaufenden Schlauch eine Verbindung in den Gehörgang besteht. Das Volumen der Druckkammer 20 ist etwa 50 Mal so groß wie das Volumen des Innenraums im Ohr zwischen Otoplastik und Trommelfell, und der Hubraum der Kolbenpumpe 22 ist etwa so groß wie das Volumen im Ohr-Innenraum. Somit wird mit einem Hub des Kolbens 25 entlang der Strecke a das Luftvolumen in der Druckkammer im Verhältnis der Größe des Luftvolumens eines mittleren Gehörganges komprimiert.

In die Druckkammer 20 ist ein Kolben 26 einschiebbar, mit dem das Volumen der Druckkammer entsprechend dem Standort der Meßeinrichtung über Meereshöhe verkleinert werden kann, so daß der atmosphärische Druck das Meßergebnis nicht beeinflussen kann. Die Einstellung des Kolbens 26 erfolgt einmalig bei Inbetriebnahme des Gerätes, wobei der Schlauch 23 dicht verschlossen wird und der Kolben 26 so eingestellt wird, daß bei einem Hub des Kolbens 25 der Pumpe 22 das Meßgerät am Ende des Hubes anzeigt, daß das System dicht ist.

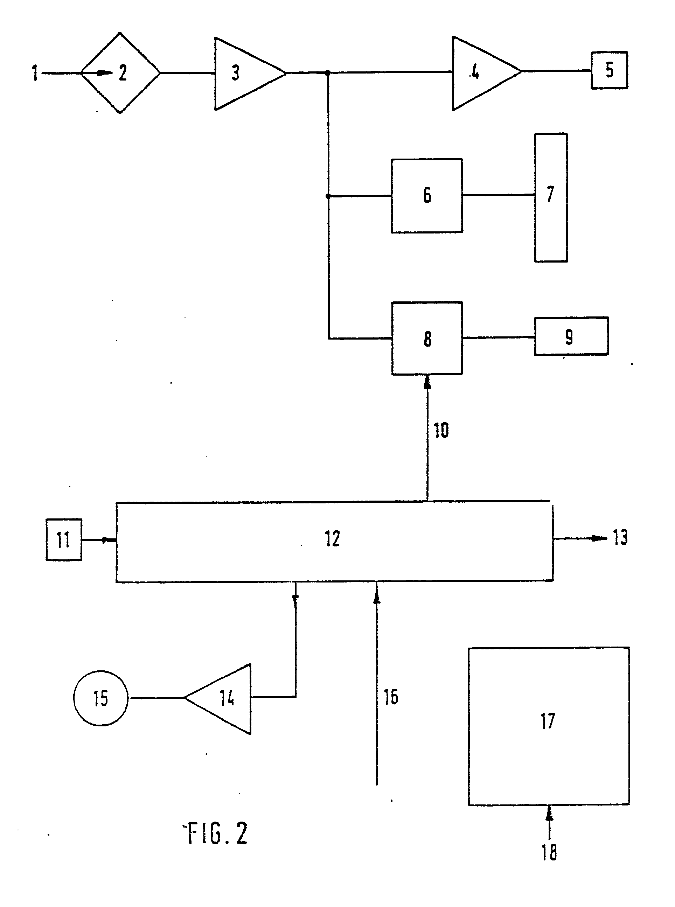

An die Druckkammer 20 ist über eine Leitung 1 die in Fig. 2 dargestellte Meß- und Anzeige-Vorrichtung angeschlossen. Die Leitung 1 führt zu einem Drucksensor 2, der die in der Druckkammer 20 auftretenden Druckänderungen in eine elektrische Spannung umsetzt, die in einem Verstärker 3 verstärkt und über einen Treiber-Puffer 4 einem schreibenden Meßgerät 5 zugeführt wird. Eine Steuerschaltung 12 sorgt dafür, daß der Pump- und Meßvorgang in einem vorgegebenen zeitlichen Ablauf erfolgt, wobei über einen nicht dargestellten Fußschalter über eine Leitung 16 das Startsignal ausgelöst wird. Mit Auslösung des Startsignals wird über einen Treiber-Verstärker 14 ein Motor 15 in Gang gesetzt, der den Kolben 25 der Pumpe antreibt, so daß dieser einen Hub ausführt. Ein Sensor 11 dient dabei zur Feststellung der Position des Kolbens 25, wobei die Steuerschaltung 12 dafür sorgt, daß bei Beginn eines Meßvorgangs der Kolben immer seine Ausgangslage einnimmt. Eine Ausgangsleitung 13 der Steuerschaltung 12 setzt zugleich mit dem Antrieb des Motors 15 das schreibende Meßgerät 5 in Betrieb, das den Druckverlauf in dem System über der Zeit aufzeichnet. In das Meßgerät wird dabei die in Fig. 3 dargestellte Meßkarte eingelegt, die speziell auf das Meßgerät abgestellt ist und eine vorgegebene Kurve enthält, die dem zeitlichen Verlauf des Druckes entspricht, wenn mit Einschaltung der Pumpe 22 der Druckaufbau beginnt, wobei der Idealfall angenommen ist, daß nach einem Hub des Kolbens 25 der vorgegebene Überdruck aufgebaut ist und auch erhalten bleibt, mit anderen Worten, daß der Ohrabdruck bzw. die Otoplastik den Gehörgang vollkommen dicht abschließt. Die Steilheit der Kurve wird über das Steuergerät 11, das die Geschwindigkeit des Kolbens 25 bestimmt und durch die Vorschubgeschwindigkeit des schreibenden Meßgerätes 5 vorgegeben. Der Schreiberstift durchfährt also bei jeder Messung diese ansteigende Flanke der Kurve, wobei je nach Dichtigkeit des Ohrabdruckes oder der Otoplastik das in die Meßkarte eingezeichnete Maximum der Flanke erreicht wird oder nicht. Ausgehend von den Parametern der Druckerzeugungsvorrichtung und von der Tatsache, daß die mittlere Rohrlänge einer Otoplastik 18 mm beträgt, kann die ansteigende Flanke der Kurve so geeicht werden, daß von ihr unmittelbar abgelesen werden kann, welchem Durchmesser in Bruchteilen eines Millimeters eine Undichtigkeit entspricht. Die Bandbreite der Skala verläuft dabei beispielsweise von dem Wert 1 mm am Fußpunkt bis zum Wert 0 mm am Maximum, so daß unmittelbar bewertet werden kann, wie groß die Undichtigkeit ist, und ob es sich lohnt, diese Undichtigkeit zu beseitigen, deren Ort — wie in der erwähnten eigenen DE-OS angegeben — durch eine Flüssigkeit sichtbar gemacht werden kann. In einer vorgegebenen Zeitspanne nach Beendigung der Bewegung des Kolbens 25 der Pumpe 22 enthält die Meßkarte eine in Ordinatenrichtung von 0 bis 100 bezifferte Bewertung, wobei die Ziffer 100 dem Idealzustand entspricht, daß auch nach dieser vorgegebenen Zeitspanne, die beispielsweise 0,7 s beträgt, der Druck noch nicht abgefallen ist. In die Meßkarte ist als Beispiel eine Meßkurve eingezeichnet, die anzeigt, daß eine Undichtigkeit entsprechend einem Durchmesser von 0,4 mm vorhanden ist und zum Zeitpunkt des zweiten Meßwertes der Druck auf 35 % seines Sollwertes abgefallen ist. Aus dieser Kurve erkennt der Fachmann, daß beispielsweise im Falle eines Ohrabdruckes ein noch ausreichendes Ergebnis vorliegt, und daß ein neuer Ohrabdruck nicht erstellt werden muß.

Die Anzeigevorrichtung muß nicht ein schreibendes Meßgerät sein. Wie in Fig. 2 dargestellt ist, kann an den Verstärker 3 alternativ oder auch zusätzlich noch ein Wandlersystem 6 angeschlossen werden, das die analogen Werte des Drucksensors 2 so umsetzt, daß in einer säulenförmigen LED-Anzeige 7 jeweils der aktuelle Druck mit einer geeigneten Zahlenbewertung angezeigt wird. Alternativ oder zusätzlich kann an den Verstärker 3 auch noch ein Analog-Digital-Wandler 8 angeschlossen werden, der von der Steuerschaltung 12 über eine Leitung 10 angesteuert wird und in einer digitalen Anzeigevorrichtung 9 in Ziffern von 1 bis 100 den Druckabfall in % angibt, der dem zweiten Meßwert bei dem schreibenden Meßgerät in Fig. 3 entspricht.

Die Pumpe 22 enthält noch eine Entlüftungsvorrichtung 27, mit der das System entlüftet werden kann. Dies geschieht automatisch in der Bereitschaftsstellung, in die die Steuerschaltung 12 das Meßgerät nach Abschluß einer Messung zurückstellt. Durch Betätigung des Fußschalters kann auch von der Bedienungsperson die Messung abgebrochen und das Gerät wieder in die Bereitschaftsstellung gebracht werden, in der ein neuer Meßvorgang von vorn begonnen werden kann.

Im übrigen enthält die Meßschaltung gemäß Fig. 2 noch zur Energieversorgung ein Netzteil 17, das über eine Leitung 18 an das Stromnetz angeschlossen ist.

**Patentansprüche**

1. Meßeinrichtung zur Prüfung der Dichtigkeit eines als Vorlage für die Herstellung einer Otoplastik dienenden Ohrabdruckes und/oder einer im Gehörgang eines Ohres angeordneten Otoplastik, mit der über eine luftdurchlässige Verbindung in dem durch das Trommelfell und den Ohrabdruck bzw. der Otoplastik begrenzten inneren Raum ein von dem außen vorhandenen Luftdruck abweichender Lufdruck herstellbar und Änderungen des erzeugten abweichenden Luftdruckes meßbar sind, dadurch gekennzeichnet, daß die luftdurchlässige Verbindung an die zur Erzeugung des abweichenden Luftdruckes dienende Pumpe (22) über eine Druck-Kammer (20) angeschlossen ist, deren Volumen zwischen etwa 20 bis 100 Mal so groß, vorzugsweise etwa 50 Mal so groß ist wie das Volumen des inneren Raumes im Ohr (24), daß als Pumpe (22) eine Kolbenpumpe dient, deren Hubraum etwa dem Volumen des inneren Raumes im Ohr (24) entspricht, daß das Volumen der Druck-Kammer (20) in Anpassung an den atmosphärischen Druck am Meßort einstellbar ist, und daß eine den Zeitablauf des Pump- und Meßvorganges vorgebende Steuerschaltung (12) vorgesehen ist.

2. Meßeinrichtung nach Anspruch 1, dadurch gekennzeichnet, daß als Einstellmittel ein in die Druckkammer (20) einschiebbarer Kolben (26) dient.

3. Meßeinrichtung nach einem der vorhergehenden Ansprüche, dadurch gekennzeichnet, daß die Steuerschaltung (12) mit Auslösung des Pumpvorganges ein schreibendes Meßgerät (5) ansteuert, das den Augenblickswert des Druckes über der Zeit aufzeichnet, wobei nach Ablauf der Zeit, in der der Kolben (25) der Pumpe (22) einen Hub ausgeführt hat, der Maximalwert als Maß für den Durchmesser einer Undichtigkeit ablesbar ist und zu einem vorgegebenen späteren Zeitpunkt ein Wert als Maß für den dann noch verbliebenen Druck in einer Skala von 100 bis 0 ablesbar ist, wobei die Zahl 100 dem Zustand einer vollkommenen Dichtigkeit entspricht.

4. Meßeinrichtung nach Anspruch 3, dadurch gekennzeichnet, daß zusätzlich oder anstelle des schreibenden Meßgerätes (5) eine analoge Anzeigevorrichtung (7) für den erreichten Maximalwert des Druckes und eine digitale Anzeile (9) für den nach dem vorgegebenen späteren Zeitpunkt verbliebenen Druck vorgesehen ist.

5. Meßeinrichtung nach Anspruch 4, dadurch gekennzeichnet, daß die analoge Anzeigevorrichtung (7) aus einer Gruppe von säulenförmig angeordneten LED-Elementen besteht.

## Claims

1. Measuring device for testing the sealing tightness of an ear impression serving as a model for production of an otoplasty and/or an otoplasty located in the auditory canal of an ear, by which, via an air-permeable connection in the inner space bounded by the ear drum and the ear impression or the otoplasty, it is possible to establish an air pressure other than that which is externally available and to measure variations in the divergent air pressure which is generated characterised in that the air permeable connection to the pump (22) which serves to generate the divergent air pressure is connected via a pressure chamber (20), the volume of which is about 20 to 100 times as great and preferably about 50 times as great as the volume of the inner space in the ear (24), and in that a piston pump serves as the pump (22), its swept capacity corresponding substantially to the volume of the inner space in the ear (24), and in that the volume of the pressure chamber (20) is adjustable at the measuring site for adapatation to atmospheric pressur, and in that a control circuit (12) is provided which gives the time lapse involved in the pumping and measuring process.

2. Measuring device according to Claim 1, characterised in that a piston (26) which can be pushed into the pressure chamber (20) serves as the adjusting means.

3. Measuring device according to one of the preceding claims, characterised in that the control circuit (12), as the pumping process is triggered, operates a recording meter (5) which records the momentary value of the pressure in relation to the time whereby, once the time has elapsed in which the piston (25) of the pump (22) has performed one stroke, the maximum value can be read off as a measure for the diameter of a leak and at a predetermined later point in time, a value can be read off from a scale from 100 to 0 as a measure of the still remaining pressure, the number 100 corresponding to the condition of complete sealing tightness.

4. Measuring device according to Claim 3, characterised in that in addition to or instead of the recording meter (5), an analogue display device (7) is provided to show the attained maximum value of the pressure and a digital display (9) for the pressure remaining after the predetermined later point in time.

5. Measuring device according to Claim 4, characterised in that the analogue display device (7) consists of a group of LED elements located in the form of a column.

## Revendications

1. Dispositif de mesure servant à tester l'étanchéité d'une empreinte d'oreille utilisée comme modèle pour la fabrication d'une otoplastie et/ou d'une otoplastie introduite dans le conduit auditif d'une oreille, et au moyen duquel on règle, au moyen d'une conduite pneumatique, dans la chambre interne limitée par le tympan et l'empreinte de l'oreille ou l'otoplastie, une pression d'air différente de celle qui règne à l'extérieur et on mesure les variations de ladite pression d'air ainsi produite, caractérisé en ce que la conduite pneumatique est reliée à une pompe (22) servant à produire ladite pression d'air différente, par l'intermédiaire d'une chambre de compression (20) dont le volume est environ de 20 à 100 fois, et de préférence de 50 fois, supérieur à celui de ladite chambre interne dans l'oreille (24), en ce que la pompe (22) est une pompe à piston dont la cylindrée correspond à peu près au volume de ladite chambre interne dans l'oreille (24), en ce que le volume de la chambre de compression (20) est réglable en fonction de la pression atmosphérique régnant au point de mesure, et en ce qu'il est prévu un circuit de réglage (12) de la durée de l'action de la pompe et de la mesure.

2. Dispositif de mesure suivant la revendication 1, caractérisé en ce qu'un piston (26), capable de coulisser dans la chambre de compression (20), sert de moyen de réglage.

3. Dispositif de mesure suivant l'une des revendications précédentes, caractérisé en ce que le circuit de réglage (12) actionne, au déclenchement de l'action de la pompe, un enregistreur (5) qui indique, pendant ladite durée, la valeur instantanée de la pression, de manière qu'à la fin du temps pendant lequel le piston (25) de la pompe (22) a accompli une course, la valeur maximale représente la mesure du diamètre d'inétanchéité et, qu'à un moment ultérieur donné, la valeur indiquée sur une échelle de 100 à 0, où le chiffre 100 correspond à l'état d'étanchéité absolue, représente la mesure de la pression restante.

4. Dispositif suivant la revendication 3, caractérisé en ce que sont prévus, en plus ou à la place de l'enregistreur (5), un dispositif indicateur analogique (7) pour la valeur maximale atteinte de la pression et un indicateur numérique (9) pour la pression restante au moment ultérieur donné.

5. Dispositif de mesure suivant la revendication 4, caractérisé en ce que le dispositif indicateur analogique (7) est un groupe de diodes électroluminescentes LED formant une colonne.

FIG.1

FIG.3

FIG. 2